# EUROPEAN PATENT APPLICATION

(11) **EP 2 669 777 A1**
(43) Date of publication of application: **04.12.2013**
(21) Application number: 11856667.8
(22) Date of filing: 21.10.2011
(51) Int. Cl.: G06F 3/048

(54) **TERMINAL DEVICE AND ICON MANAGEMENT METHOD**

(30) Priority: 25.01.2011 JP 2011013153
(71) Applicant: NTT DoCoMo, Inc., Tokyo 100-6150 (JP)
(72) Inventor: YAMAKI, Taeko, Tokyo 100-6150 (JP); MURAKAMI, Keiichi, Tokyo 100-6150 (JP)
(74) Representative: Beder, Jens
(86) International application number: PCT/JP2011/074340
(87) International publication number: WO 2012/101885

(57) **Abstract**

A terminal device 1 has an operating unit 11 which accepts an operation by a user, a display unit 13 which classifies one or a plurality of icons 32 into one or a plurality of groups and displays the classified icons, and a control unit 12 which controls the display unit 13 so as to display a new group when an icon 32 displayed on the display unit 13 is set to a move mode by an operation accepted by the operating unit 11.

## Description

### Technical Field

The present invention relates to a terminal device which manages icons and an icon management method.

### Background Art

An object classifying method is known in which objects such as files and icons are classified into and displayed in a plurality of folders. Specifically, a user creates a plurality of folders and classifies objects into the respective folders according to attributes of the objects such as type and created date and time. With such an object classifying method, after creating a new folder, the user must perform an operation for moving an object from a source folder to the new folder.

For example, Patent Literature 1 below discloses a technique intended to save a user from such trouble by automatically creating a folder upon selection of a thumbnail image on a display interface which displays a plurality of thumbnail images. In other words, Patent Literature 1 below discloses a technique in which, upon selection of a thumbnail image, a new folder is created without having the user perform an operation for creating the new folder.

### Citation List

### Patent Literature

Patent Literature 1: Japanese Translation of PCT Application No. 2008-507743

### Summary of Invention

### Technical Problem

However, with the technique disclosed in Patent Literature 1 above, since a new folder is created whenever a thumbnail image is selected, a new folder is created even when simply editing or replaying an image file. Therefore, unnecessary folders end up being created. Accordingly, the user must go through the trouble of having to manually delete such unnecessary folders by operating an input device such as a touch panel.

In order to solve such problems, it is an object of the present invention to provide a terminal device and an icon management method for managing icons while being able to reduce an operation burden on a user.

### Solution to Problem

In order to solve the problem described above, the terminal device according to the present invention includes: operating means for accepting an operation by a user; display means for classifying one or a plurality of icons into one or a plurality of groups and displaying the classified icons; and control means for controlling the display means to display a new group when an icon displayed on the display means is set to a move mode by an operation accepted by the operating means.

In addition, an icon management method according to the present invention includes: an operating step of accepting an operation by a user; a displaying step of classifying one or a plurality of icons into one or a plurality of groups and displaying the classified icons on display means; and a new group displaying step of displaying a new group on the display means when an icon displayed in the displaying step is set to a move mode by an operation performed in the operating step.

According to the present invention, when an icon displayed on the display means is set to a move mode by an operation accepted by the operating means, by displaying a new group on the display means, the new group can be automatically created without having a user perform an operation for adding the group. As a result, the operation burden on the user can be reduced.

In addition, in the terminal device according to the present invention, when the move mode of an icon is exited without the icon being added to the new group displayed on the display means, the control means may delete the new group from a display screen of the display means. Accordingly, an unnecessary group can be automatically deleted without having the user perform an operation for deleting the group. As a result, the operation burden on the user can be reduced.

Furthermore, the terminal device according to the present invention may further include storage means for storing icons and groups, wherein when an icon displayed on the display means is set to the move mode by an operation accepted by the operating means, the control means may control the display means so as to display a new group without creating a new group in the storage means, and when the icon is added to the new group and then the move mode of the icon is exited, the control means may create the new group in the storage means. Accordingly, when a movement of an icon to a new group displayed on the display means is finalized, the new group can be created in the storage means. As a result, a storage area of the storage means can be used effectively.

### Advantageous Effects of Invention

According to the present invention, an operation burden on a user when creating a group can be reduced.

### Brief Description of Drawings

Fig. 1 is a diagram showing a functional configuration of a terminal device according to an embodiment of the present invention;
Fig. 2 is a diagram showing a hardware configuration of the terminal device according to the embodiment of the present invention;
Fig. 3 is a diagram showing an example of a screen displayed on a display device of the terminal device according to the embodiment of the present invention;
Fig. 4 is a diagram showing an example of a submenu screen displayed on the display device of the terminal device according to the embodiment of the present invention;
Fig. 5 is a flow chart for describing an icon deletion process that is executed by the terminal device according to the embodiment of the present invention;
Fig. 6 is a flow chart for describing a multiple icon deletion process that is executed by the terminal device according to the embodiment of the present invention;
Fig. 7 is a flow chart for describing an icon name change process that is executed by the terminal device according to the embodiment of the present invention;
Fig. 8 is a flow chart for describing an icon movement process that is executed by the terminal device according to the embodiment of the present invention;
Fig. 9(a) is a diagram showing an example of a screen during an icon movement process that is executed by the terminal device according to the embodiment of the present invention, and Fig. 9(b) is a diagram showing an example of a screen after an icon movement process that is executed by the terminal device according to the embodiment of the present invention;
Fig. 10 is a flow chart for describing an icon new addition process that is executed by the terminal device according to the embodiment of the present invention;
Fig. 11 is a flow chart for describing a group addition process that is executed by the terminal device according to the embodiment of the present invention; and
Fig. 12(a) is a diagram showing an example of a screen displayed on the display device of the terminal device according to the embodiment of the present invention, and Fig. 12(b) is a diagram showing an example of a display data management table according to the embodiment of the present invention.

### Description of Embodiments

Hereinafter, embodiments of a terminal device and an icon management method according to the present invention will be described in detail with reference to the drawings. In the description of the drawings, like elements will be denoted by like reference signs and overlapping descriptions will be omitted.

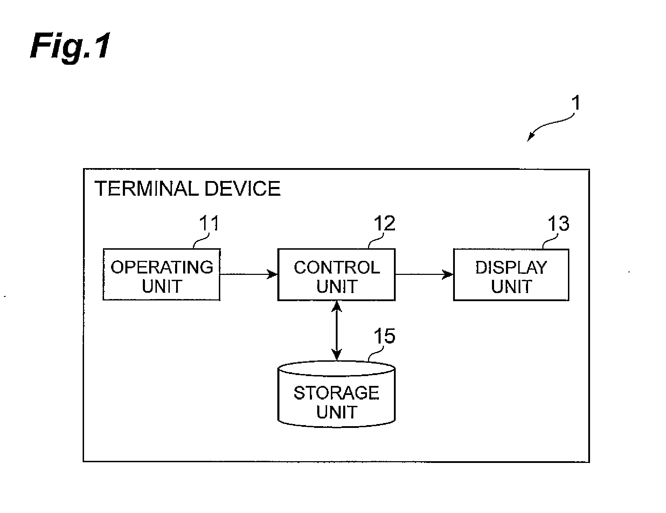

Fig. 1 shows a terminal device 1 according to the present embodiment. The terminal device 1 is a device that is operated by a user to move, delete, or the like an icon, a file, or the like that is displayed on a display device such as a liquid crystal display. The terminal device 1 is a device comprising an input device and a display device, and examples thereof include a mobile phone, a smartphone, a PDA (Personal Digital Assistant), a note PC, and a desktop PC. As shown in Fig. 1, the terminal device 1 is configured so as to include an operating unit 11 (operating means), a control unit 12 (control means), a display unit 13 (display means), and a storage unit 15 (storage means).

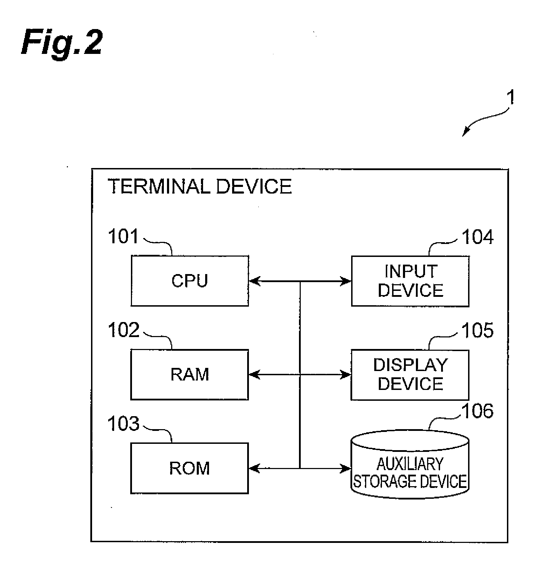

Fig. 2 shows a hardware configuration of the terminal device 1. As shown in Fig. 2, the terminal device 1 is physically constituted by hardware including a CPU (Central Processing Unit) 101, a RAM (Random Access Memory) 102 that is a main storage device, a ROM (Read Only Memory) 103, an input device 104 such as a touch panel or operation keys, a display device 105 such as a liquid crystal display, and an auxiliary storage device 106 such as a hard disk. The respective functions of the terminal device 1 to be described later are realized by reading predetermined computer software into hardware such as the CPU 101 or the RAM 102 shown in Fig. 2, operating the input device 104, the display device 105, and the like under the control of the CPU 101, and reading or writing data from or to the RAM 102 or the auxiliary storage device 106.

Next, functions of the terminal device 1 according to the present embodiment will be described.

The operating unit 11 is, for example, a touch panel, and functions as operating means for accepting operations by a user. By operating the operating unit 11, the user can perform operations such as selecting and moving an icon displayed on the display unit 13. The operating unit 11 may be operation keys or other input devices. For example, when the operating unit 11 is a touch panel, the operating unit 11 identifies an icon or a softkey displayed at a position pressed by the user and detects that an operation for executing a function assigned to the icon or the softkey has been performed. Subsequently, the operating unit 11 outputs operation information indicating the detected operation to the control unit 12.

Based on the operation information from the operating unit 11, the control unit 12 functions as control means for performing various processes. For example, when the control unit 12 receives operation information indicating that an icon displayed on the display unit 13 has been set to a move mode from the operating unit 11, the control unit 12 functions as control means for controlling the display unit 13 so as to display a new group.

The display unit 13 is, for example, a liquid crystal display which displays various types of information including images, and functions as display means for displaying icons and groups (folders). The display unit 13 performs display based on display information outputted from the control unit 12.

The storage unit 15 functions as storage means for storing data such as icons and group files (folder files). When an instruction to execute a function represented by an icon is inputted to the control unit 12 from the operating unit 11, the control unit 12 reads a file corresponding to the icon from the storage unit 15 and executes the file. The group file stored in the storage unit 15 is a list storing icons and files belonging to the group as well as entry information related to other groups. Entry information includes information such as a file name, a file size, and information indicating an address on the storage unit 15.

In addition, when a file such as an icon is created in the storage unit 15, the control unit 12 creates entry information related to the file and registers (stores) the entry information in a group file of a group to which the file belongs. On the other hand, when a file such as an icon is deleted from the storage unit 15, the control unit 12 deletes entry information related to the file from a group file. When a group is created in the storage unit 15, the control unit 12 creates entry information related to the group and registers the entry information in a group file of a group to which the group belongs. On the other hand, when a group is deleted, the control unit 12 deletes entry information related to the group from a group file of a group to which the group belongs.

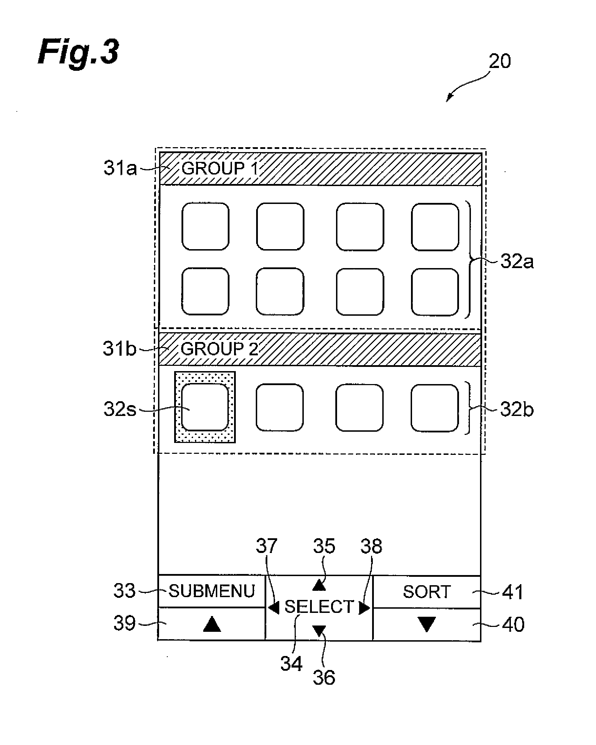

Fig. 3 shows an example of a Box screen 20 displayed on the display unit 13 of the terminal device 1 according to the present embodiment. In the following description, it is assumed that the terminal device 1 is a smart phone comprising a touch panel.

The Box screen 20 displays a plurality of icons 32 classified into groups. For example, in a state where the terminal device 1 is displaying a standby screen and an icon 32 on the standby screen is not in focus (not selected: a standby screen inactive state), the Box screen 20 is displayed on the display unit 13 when the user operates the operating unit 11 and presses a down key. The icon 32 is also referred to as a Box icon and is a shortcut file to, for example, a content file that is frequently used by the user or to a file for executing a function that is frequently used by the user. A shortcut file is a file having link information for referencing a specific file or folder. As described above, a function which provides one or a plurality of icons representing a shortcut file to a content or a function that is frequently used by the user is referred to as a Box. An icon 32s in focus (selected) is identifiably displayed by, for example, using a color that differs from other icons 32.

One or a plurality of icons 32 is displayed on the Box screen 20. In addition, the one or the plurality of icons 32 is classified into one or a plurality of groups. The Box screen 20 shown in Fig. 3 displays a group 1 and a group 2, and a plurality of icons 32 is classified into each group. In addition, the respective groups are separated by a separator line 31. For example, the group 1 is separated by a separator line 31a and includes icons 32a displayed in a region between the separator line 31 a and a separator line 31b. In addition, the group 2 is separated by the separator line 31b and includes icons 32b displayed in a region below the separator line 31b.

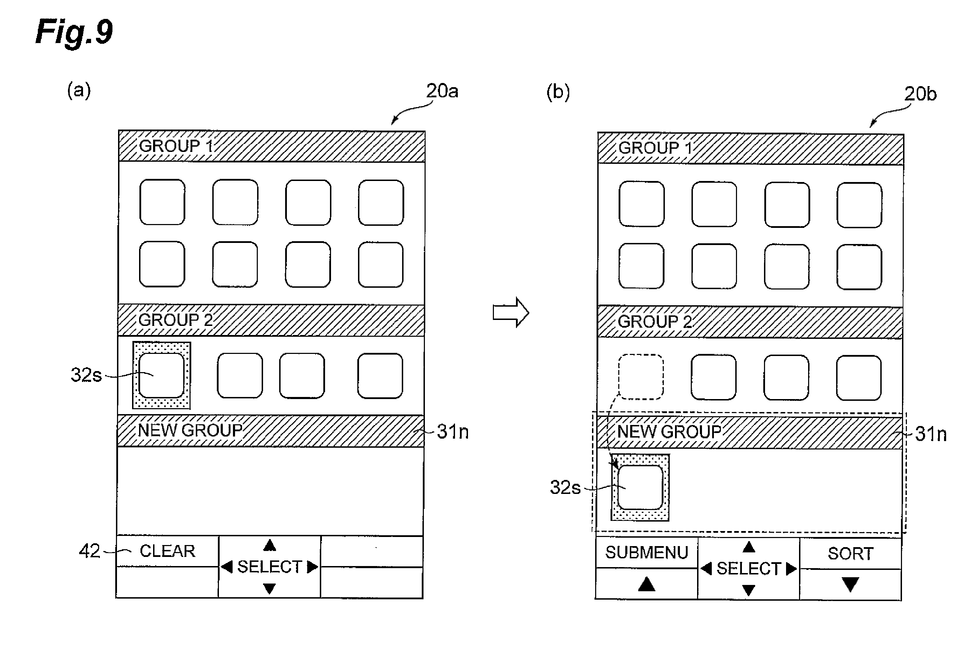

Furthermore, a plurality of softkeys is arranged at the bottom of the Box screen 20. Examples of displayed softkeys include a submenu key 33 for displaying a submenu, a select key 34 for selecting and deciding on an icon 32, an up key 35 for moving focus or the like upward, a down key 36 for moving focus or the like downward, a left key 37 for moving focus or the like leftward, a right key 38 for moving focus or the like rightward, a page up key 39 for scrolling up one screen, a page down key 40 for scrolling down one screen, and a sort key 41 for sorting the icons 32. Moreover, the displayed softkeys are keys for executing necessary functions in accordance with a mode selected or a screen displayed with respect to the icons 32. For example, when movement of an icon, deletion of a plurality of icons, change to an icon name, new addition of an icon, or addition of a group is selected, a clear key 42 (refer to Fig. 9(a)) for exiting each mode and restoring an original state is displayed.

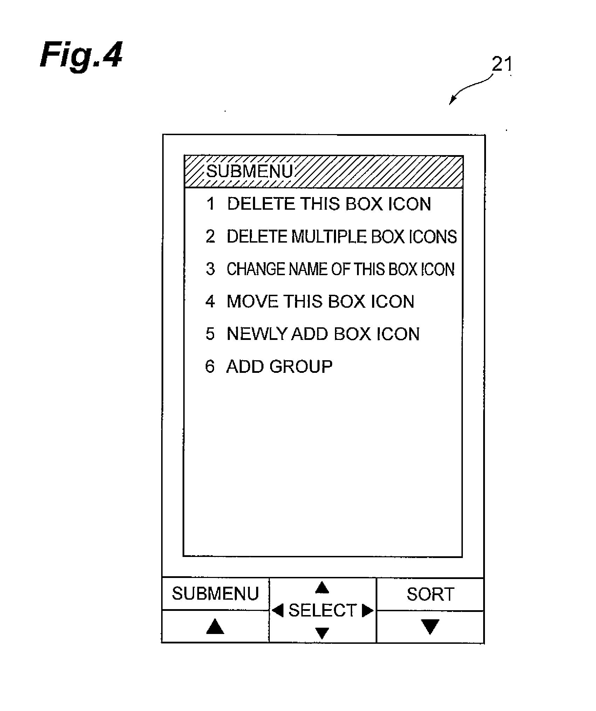

Fig. 4 shows an example of a submenu screen 21 displayed on the display unit 13 of the terminal device 1 according to the present embodiment. In a state where the icon 32s is in focus on the Box screen 20, the submenu screen 21 is displayed when a submenu key 33 is pressed. A plurality of submenus is displayed on the submenu screen 21. Processes of the respective submenus will now be described.

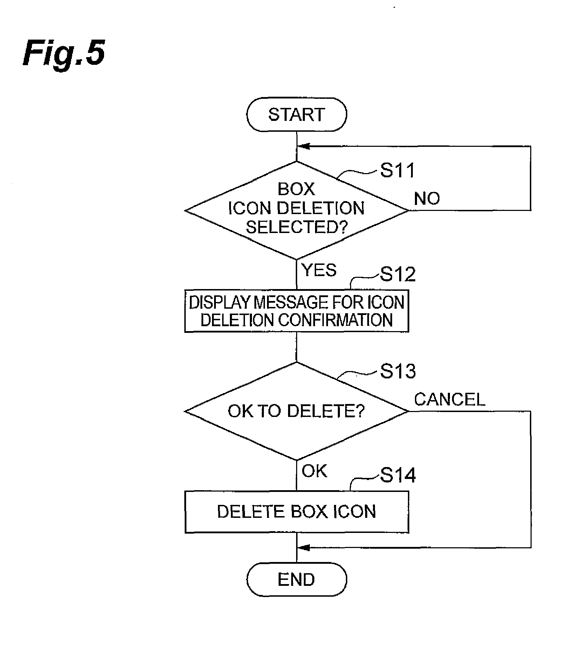

An icon deletion process executed by the terminal device 1 according to the present embodiment will be described with reference to the flow chart shown in Fig. 5. The process involves deleting the single icon 32s displayed on the Box screen 20.

The control unit 12 judges whether or not "1: Delete this Box icon" has been selected by the operating unit 11 in a state where the submenu screen 21 is being displayed (S11). When it is judged that the submenu has been selected, the control unit 12 reads display information for icon deletion confirmation from a display information storage unit (not shown) and outputs the display information to the display unit 13. Based on the display information for icon deletion confirmation, the display unit 13 displays a dialog box including a message such as "Do you wish to delete this Box icon?", an OK button, and a cancel button (S12).

Next, the control unit 12 judges which of the OK button and the cancel button has been selected by the operating unit 11 (S13). When it is judged that the OK button has been selected, the control unit 12 outputs display information for deleting the icon 32s currently in focus from the screen 20 to the display unit 13. In addition, the control unit 12 deletes the icon 32s from the storage unit 15 and deletes entry information related to the icon 32s from the group file of the group to which the icon 32s belongs (S 14). Furthermore, the display unit 13 displays a screen resulting from the deletion of the icon 32s from the Box screen 20 and ends the icon deletion process. On the other hand, when it is judged in S 13 that the cancel button has been selected, the control unit 12 outputs display information for displaying the Box screen 20 prior to performing the icon deletion process on the display unit 13 without deleting the icon 32s. Subsequently, the display unit 13 displays the Box screen 20 and ends the icon deletion process.

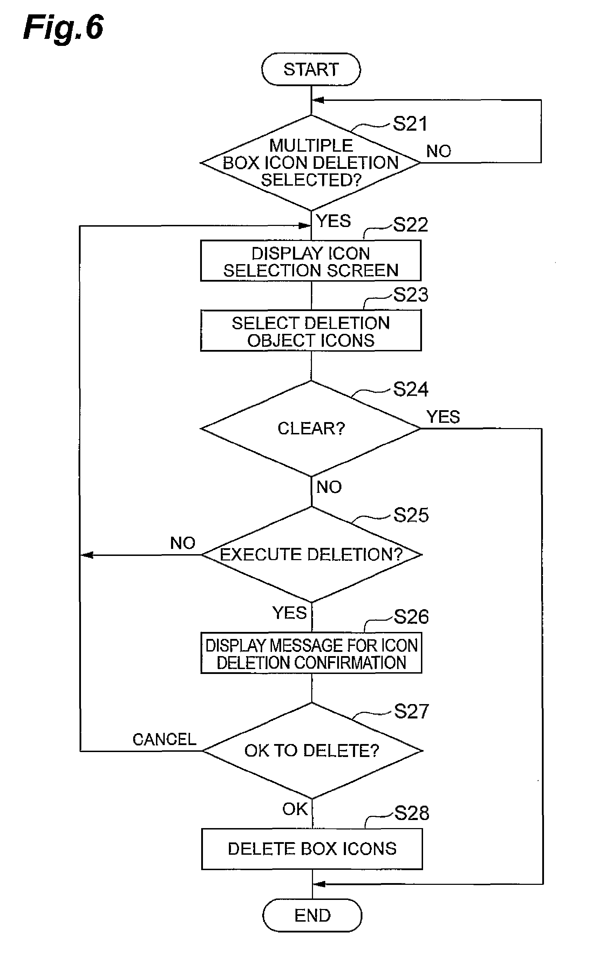

A multiple icon deletion process executed by the terminal device 1 according to the present embodiment will be described with reference to the flow chart shown in Fig. 6. The process involves simultaneously deleting a plurality of icons 32 displayed on the Box screen 20.

The control unit 12 judges whether or not "2: Delete multiple Box icons" has been selected by the operating unit 11 in a state where the submenu screen 21 is being displayed (S21). When it is judged that this submenu has been selected, the control unit 12 outputs display information to the display unit 13 to have the display unit 13 display a screen for selecting an icon that is a deletion object. The display unit 13 displays a screen for selecting an icon 32 that is a deletion object (S22). Next, an icon that is a deletion object is selected by the operating unit 11 (S23). An icon that is a deletion object is selected by pressing the select key 34 in a state where the icon 32 is in focus. In addition, when a select all key that is displayed on the screen for selecting an icon that is a deletion object is pressed, all of the icons are selected.

The control unit 12 judges whether or not a clear operation has been performed by the operating unit 11 in a state where the screen for selecting an icon that is a deletion object is being displayed (S24). Moreover, clearing is performed by pressing a clear key 42 that is displayed on the screen for selecting an icon that is a deletion object. When it is judged that a clear operation has been performed, the control unit 12 instructs the display unit 13 to display the Box screen 20 prior to performing the multiple icon deletion process without deleting the icon 32. Subsequently, the display unit 13 displays the Box screen 20 and ends the multiple icon deletion process.

On the other hand, when it is judged in S24 that a clear operation has not been performed, the control unit 12 judges whether or not an operation for executing a deletion of the icon 32 has been performed by the operating unit 11 (S25). Moreover, an execution of deletion is performed by pressing an execute deletion key that is displayed on the screen for selecting an icon that is a deletion object. When it is judged that an operation for executing deletion has not been performed, a return is made to the process of S22. When it is judged in S25 that an operation for executing deletion has been performed, the control unit 12 reads display information for icon deletion confirmation from the display information storage unit (not shown) and outputs the display information to the display unit 13. Based on the display information for icon deletion confirmation, the display unit 13 displays a dialog box including a message such as "Do you wish to delete these Box icons?", an OK button, and a cancel button (S26).

Next, the control unit 12 judges which of the OK button and the cancel button has been selected by the operating unit 11 (S27). When it is judged that the cancel button has been selected, a return is made to the process of S22. On the other hand, when it is judged in S27 that the OK button has been selected, the control unit 12 outputs display information for deleting the selected icons 32 from the Box screen 20 to the display unit 13. In addition, the control unit 12 deletes the selected icons 32 from the storage unit 15 and deletes entry information related to the selected icons 32 from the group files of the groups to which the icons 32 belong (S28). Furthermore, the display unit 13 displays a screen resulting from the deletion of the icons 32 from the Box screen 20 and ends the multiple icon deletion process.

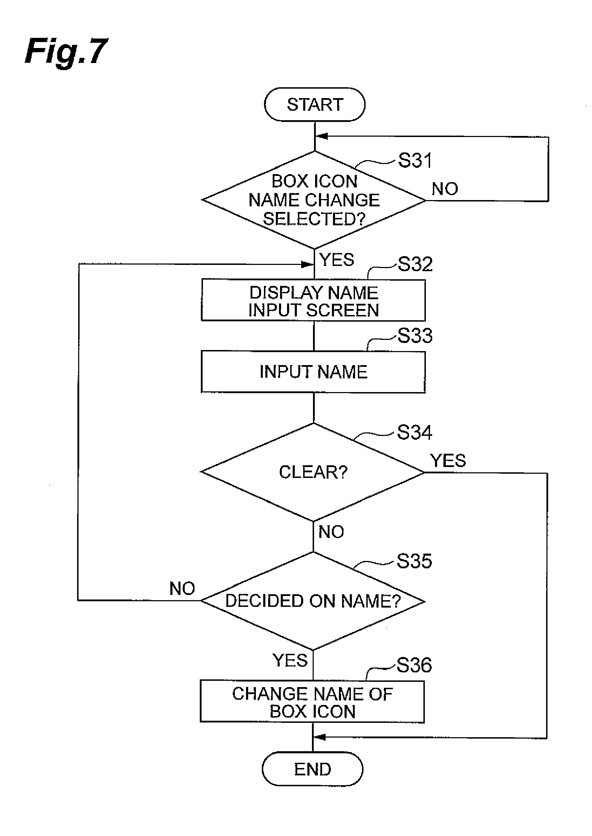

Next, an icon name change process executed by the terminal device 1 according to the present embodiment will be described with reference to the flow chart shown in Fig. 7. This process involves changing a name of an icon 32 displayed on the Box screen 20.

The control unit 12 judges whether or not "3: Change the name of this Box icon" has been selected by the operating unit 11 in a state where the submenu screen 21 is being displayed (S31). When it is judged that this submenu has been selected, the control unit 12 outputs display information to the display unit 13 to have the display unit 13 display an edit screen for changing the name of an icon 32s that is currently in focus. In addition, the display unit 13 displays the edit screen (S32). Next, a name of the icon is inputted by the operating unit 11 (S33). Input of a name of an icon is performed by pressing a text input key displayed on the edit screen. Alternatively, a name of an icon may be inputted by audio input.

The control unit 12 judges whether or not a clear operation has been performed by the operating unit 11 in a state where the edit screen is being displayed (S34). Moreover, clearing is performed by pressing a clear key 42 that is displayed on the edit screen. When it is judged that a clear operation has been performed, the control unit 12 instructs the display unit 13 to display the Box screen 20 prior to performing the icon name change process without changing the name of the icon 32s. Subsequently, the display unit 13 displays the Box screen 20 and ends the icon name change process. On the other hand, when it is judged in S34 that a clear operation has not been performed, the control unit 12 judges whether or not an operation for deciding on a name of the icon 32s has been performed by the operating unit 11 (S35). The decision of a name is performed by pressing the select key 34.

When it is judged that an operation for deciding on a name has not been performed, a return is made to the process of S32. When it is judged in S35 that an operation for deciding on a name has been performed, the control unit 12 outputs display information to the display unit 13 for changing the name of the icon 32s in focus to the name decided on the edit screen. Furthermore, the control unit 12 reads out entry information related to the icon 32s stored in the group file of a group to which the icon 32s belongs, changes the name of the icon 32s to the name decided on the edit screen, and stores the changed name (S36). In addition, the display unit 13 displays a screen resulting from the change to the name of the icon 32s that is currently in focus on the Box screen 20 and ends the icon name change process.

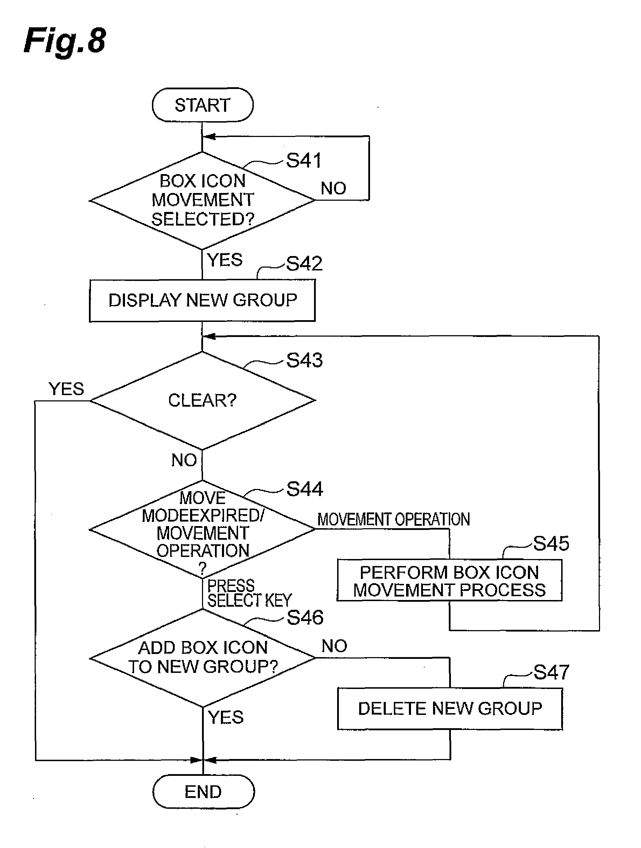

Next, an icon movement process executed by the terminal device 1 according to the present embodiment will be described with reference to the flow chart shown in Fig. 8. This process involves moving an icon 32 displayed on the Box screen 20 within a group or between groups.

The control unit 12 judges whether or not "4: Move this Box icon" has been selected by the operating unit 11 in a state where the submenu screen 21 is being displayed (S41). When it is judged that this submenu has been selected, the control unit 12 outputs display information to the display unit 13 to have the display unit 13 display a screen 20a resulting from an addition of a new group to a lowermost part of the Box screen 20. In addition, based on the display information, the display unit 13 displays the screen 20a resulting from an addition of a separator line 31n of the new group to the lowermost part of the Box screen 20 (S42). Fig. 9(a) is a diagram showing an example of the screen 20a on which the icon 32s in focus is set to the move mode and the separator line 31n is displayed at a lowermost part thereof. Moreover, in S42, the control unit 12 controls the display unit 13 so as to display the screen 20a resulting from an addition of a new group without creating a group file of the new group in the storage unit 15.

In addition, the control unit 12 sets the icon 32s currently in focus to the move mode, and outputs display information to the display unit 13 so that the display unit 13 identifiably displays the fact that the icon 32s is in the move mode. The display unit 13 displays a screen indicating that the icon 32s currently in focus on the screen 20a is in the move mode. The display unit 13 enables the fact that icon 32s is in the move mode to be identifiable by, for example, making the icon 32s translucent.

Next, the control unit 12 judges whether or not a clear operation has been performed by the operating unit 11 in a state where the screen 20a is being displayed (S43). Moreover, clearing is performed by pressing a clear key 42 that is displayed on the screen 20a. When it is judged that a clear operation has been performed, the control unit 12 instructs the display unit 13 to display the Box screen 20 prior to performing the icon movement process without moving the icon. Subsequently, the display unit 13 displays the Box screen 20 and ends the icon movement process. On the other hand, when it is judged in S43 that a clear operation has not been performed, the control unit 12 judges whether an operation for exiting the move mode of the icon or an icon movement operation has been performed by the operating unit 11 (S44). Moreover, exiting the move mode of the icon is performed by, for example, pressing the select key 34 on the screen 20a. In addition, a movement operation of the icon 32s is performed when the icon 32s is in the move mode by pressing the up key 35, the down key 36, the left key 37, or the right key 38.

When a movement operation of the icon 32s is performed by the operating unit 11, the control unit 12 instructs the display unit 13 to move the icon 32s. The display unit 13 moves the icon 32s in accordance with the operation performed on the operating unit 11 and displays the icon 32s on the screen 20a (S45). Subsequently, the control unit 12 once again makes the judgment of S43. On the other hand, when it is judged in S44 that an operation for exiting the move mode of the icon has been performed, the control unit 12 judges whether or not the icon 32s has been moved to a new group (S46). The judgment of whether or not the icon 32s has been moved to the new group is made based on whether or not the icon 32s is in a region below the separator line 31n when the move mode of the icon 32s is exited. In other words, when the icon 32s is in a region below the separator line 31n when the move mode of the icon 32s is exited, the icon 32s is judged to have been moved to the new group. Otherwise, the icon 32s is judged not to have been moved to the new group.

When it is judged that the icon 32s has been moved to the new group, the control unit 12 instructs the display unit 13 to display a Box screen 20b including the new group such as that shown in Fig. 9(b). In addition, the control unit 12 creates entry information related to the new group and stores the entry information in the group file of a group set in advance. For example, a group set in advance refers to a top-level group. Furthermore, the control unit 12 registers the entry information related to the icon 32s in the group file of the new group and deletes entry information related to the icon 32s from the group file of the source group of the icon 32s. Subsequently, the display unit 13 displays the Box screen 20b representing a state after the movement of the icon 32s and ends the icon movement process.

On the other hand, when it is judged in S46 that the icon has not been moved to the new group, the control unit 12 instructs the display unit 13 to display a Box screen from which the new group has been deleted. Subsequently, the display unit 13 deletes the new group (the separator line 31n), displays a Box screen representing a state after the movement of the icon 32s (S47), and ends the icon movement process.

Moreover, the icon movement process can be started by long-pressing the select key 34 with respect to the icon 32s that is a movement object or by pressing the sort key 41. In addition, for example, while the new group that is displayed when the icon 32s is set to the move mode is displayed named "new group", another name may be used instead. Furthermore, in S42, the control unit 12 may instruct the display unit 13 to display the screen 20a resulting from an addition of a new group and may create a group file of the new group in the storage unit 15. In this case, in S47, the control unit 12 may instruct the display unit 13 to display a Box screen from which the new group has been deleted and may delete the group file of the new group from the storage unit 15.

In addition, in S42, the control unit 12 may instruct the display unit 13 to display the screen 20a resulting from an addition of a new group, may create a group file of the new group in the storage unit 15, and may create entry information related to the new group and register the entry information to the group file of a group set in advance. In this case, in S47, the control unit 12 may instruct the display unit 13 to display a Box screen from which the new group has been deleted, may delete the group file of the new group from the storage unit 15, and may delete entry information related to the new group from the group file of the group set in advance.

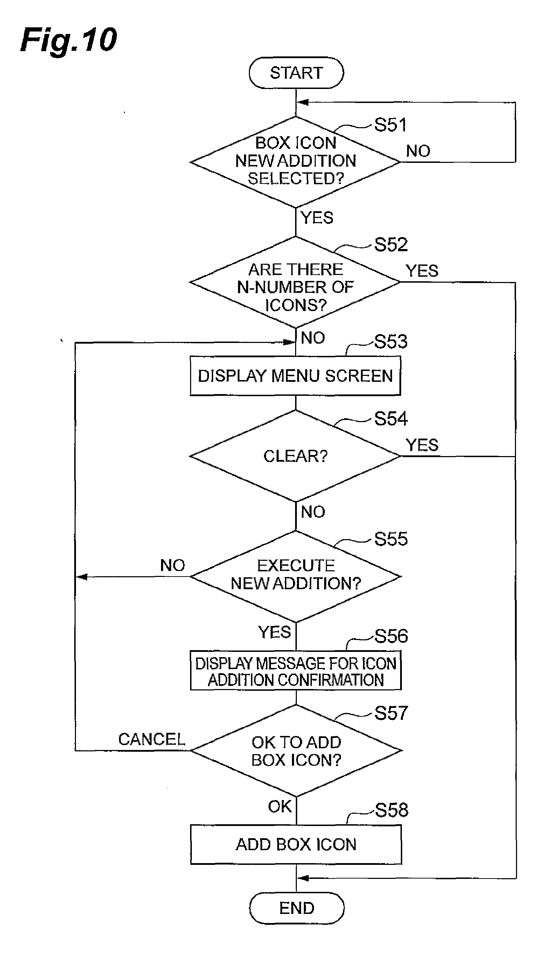

Next, an icon new addition process executed by the terminal device 1 according to the present embodiment will be described with reference to the flow chart shown in Fig. 10. This process involves newly adding an icon 32 to the Box screen 20.

The control unit 12 judges whether or not "5: Newly add a Box icon" has been selected by the operating unit 11 in a state where the submenu screen 21 is being displayed (S51). When it is judged that this submenu has been selected, the control unit 12 judges whether or not there already are N-number of icons 32 in the Box (S52). When it is judged that there already are N-number of icons 32, the control unit 12 reads out display information for notifying that icons cannot be added from the display information storage unit (not shown) and outputs the display information to the display unit 13. Based on the display information for notifying that icons cannot be added, the display unit 13 displays a dialog box including a message such as "You have exceeded the limit of Box icons" and an OK button, and ends the icon new addition process. Moreover, the upper limit N of icons 32 is a value set in the control unit 12 in advance and is, for example, 244.

On the other hand, when it is judged in S52 that the number of icons 32 in the Box is smaller than N, the control unit 12 outputs display information to the display unit 13 so as to display a menu screen. In addition, the display unit 13 displays the menu screen (S53). Next, the control unit 12 judges whether or not a clear operation has been performed by the operating unit 11 in a state where the menu screen is being displayed (S54). Moreover, clearing is performed by pressing a clear key 42 that is displayed on the menu screen. When it is judged that a clear operation has been performed, the control unit 12 instructs the display unit 13 to display the Box screen 20 prior to performing the icon new addition process without adding an icon. Subsequently, the display unit 13 displays the Box screen 20 and ends the icon new addition process.

When it is judged in S54 that a clear operation has not been performed, the control unit 12 judges whether or not an operation for executing a new addition of the icon 32 has been performed by the operating unit 11 (S55). An item is brought into focus by pressing the up key 35 or the down key 36 on the menu screen and then execution of a new addition of an icon is performed by pressing the select key 34 in a state where the item is in focus. When an operation for executing a new addition of the icon 32 has not been performed, a return is made to the process of S53. On the other hand, when it is judged in S55 that an operation for executing a new addition of the icon 32 has been performed, the control unit 12 reads out display information for icon addition confirmation from the display information storage unit (not shown) and outputs the display information to the display unit 13. Based on the display information for icon addition confirmation, the display unit 13 displays a dialog box including a message such as "Do you wish to add this item to Box icons?", an OK button, and a cancel button (S56).

Next, the control unit 12 judges which of the OK button and the cancel button has been selected by the operating unit 11 (S57). When it is judged that the cancel button has been selected, a return is made to the process of S53. On the other hand, when it is judged in S57 that the OK button has been selected, the control unit 12 outputs display information for adding an icon corresponding to the selected item to the end of the icons 32 on the Box screen 20 to the display unit 13. Furthermore, the control unit 12 adds the icon 32 corresponding to the selected item to the storage unit 15, creates entry information related to the icon 32, and stores the entry information to the group file of a group set in advance (S58). In addition, the display unit 13 displays a screen resulting from an addition of the icon 32 to the Box screen 20 and ends the icon new addition process. For example, a group set in advance refers to a top-level group.

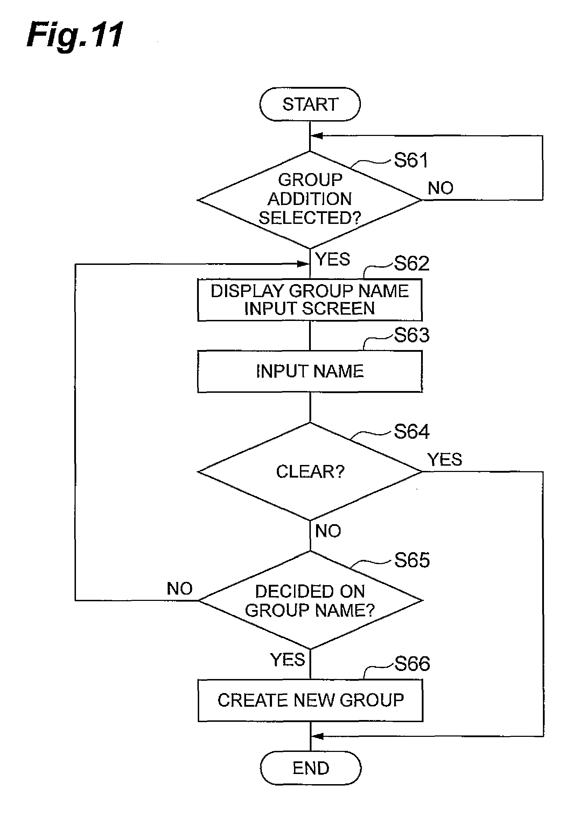

Next, a group addition process executed by the terminal device 1 according to the present embodiment will be described with reference to the flow chart shown in Fig. 11. This process involves newly adding a group to the Box screen 20.

The control unit 12 judges whether or not "6: Add a group" has been selected by the operating unit 11 in a state where the submenu screen 21 is being displayed (S61). When it is judged that this submenu has been selected, the control unit 12 outputs display information to the display unit 13 to have the display unit 13 display an edit screen for inputting a name of the group to be added. In addition, the display unit 13 displays the edit screen (S62). Subsequently, a name of the group to be added is inputted by the operating unit 11 (S63). The name of the group is inputted by pressing a text input key displayed on the edit screen. Alternatively, the name of the group may be inputted by audio input.

The control unit 12 judges whether or not a clear operation has been performed by the operating unit 11 in a state where the edit screen is being displayed (S64). Moreover, clearing is performed by pressing a clear key 42 that is displayed on the edit screen. When it is judged that a clear operation has been performed, the control unit 12 instructs the display unit 13 to display the Box screen 20 prior to performing the group addition process without adding a group. Subsequently, the display unit 13 displays the Box screen 20 and ends the group addition process.

On the other hand, when it is judged in S64 that a clear operation has not been performed, the control unit 12 judges whether or not an operation for deciding on a name of a group has been performed by the operating unit 11 (S65). The decision of a name is performed by pressing the select key 34. When it is judged that an operation for deciding on a name has not been performed, a return is made to the process of S62. When it is judged in S65 that an operation for deciding on a name has been performed, the control unit 12 outputs display information to the display unit 13 so as to add a separator line 31 displaying the name decided on the edit screen. Furthermore, the control unit 12 creates a group file of a new group in the storage unit 15, creates entry information related to the new group, and registers the entry information in the group file of a group set in advance. Due to this process, a new group is created (ski6). In addition, the display unit 13 displays a screen resulting from an addition of the separator line 31 to the Box screen 20 and ends the group addition process. For example, a group set in advance refers to a top-level group.

Next, advantageous effects of the terminal device 1 according to the present embodiment will be described. When an icon 32 displayed on the display unit 13 is set to the move mode by an operation accepted by the operating unit 11, the terminal device 1 according to the present embodiment displays a new group on the display unit 13, whereby the new group can be automatically created without having a user perform an operation for adding the group. As a result, the operation burden on the user can be reduced.

In addition, when the move mode of the icon 32 is exited without adding the icon 32 to a new group displayed on the display unit 13, the terminal device 1 according to the present embodiment deletes the new group, whereby an unnecessary group can be automatically deleted without having the user perform an operation for deleting the group. As a result, the operation burden on the user can be reduced.

Furthermore, when an icon 32 displayed on the display unit 13 is set to the move mode by an operation accepted by the operating unit 11, the terminal device 1 according to the present embodiment displays a new group on the display unit 13 without creating a group file of the new group in the storage unit 15, whereby processes related to information on the new group are no longer necessary when creating the new group. In addition, when the icon 32 is added to a new group and then the move mode of the icon is exited, the terminal device 1 according to the present embodiment creates a group file of the new group in the storage unit 15 and registers entry information of the new group in a group file of a group set in advance, whereby the new group can be accessed when use of the new group is finalized. As a result, processes related to the creation of the new group are reduced and the storage area of the storage unit 15 can be used effectively.

Moreover, the terminal device and the icon management method according to the present invention are not limited to those described in the present embodiment. The terminal device and the icon management method according to the present invention may be applied to a modification of the terminal device and the icon management method according to the embodiment described above or according to other embodiments without departing from the spirit or scope of the appended claims.

In the embodiment described above, the terminal device 1 manages icons and groups in a hierarchical structure. However, instead of managing the hierarchical structure of the groups and icons using a group file or the like, the control unit 12 may control the display unit 13 so as to display a separator line 31 of a group and icons 32 included in the group on a display screen. In other words, the control unit 12 may store information related to an arrangement of the separator line 31 of a group and icons 32 included in the group on the display screen and control display by the display unit 13 based on the arrangement information.

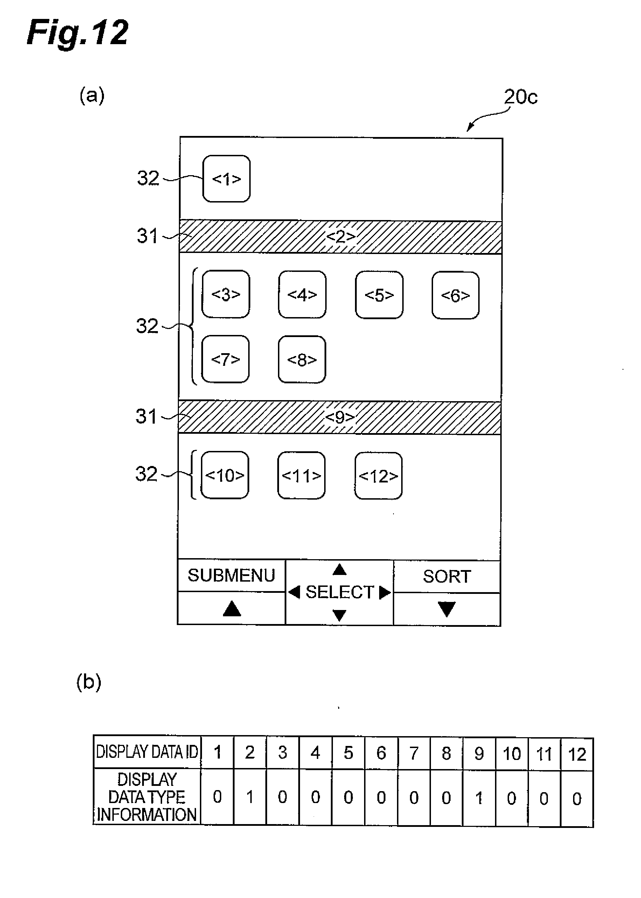

Fig. 12(a) is a diagram showing an example of a Box screen 20 displayed on the display unit 13 of the terminal device 1. Fig. 12(b) is a diagram showing an example of a display data management table stored in the storage unit 15 of the terminal device 1. The display data management table is a table for managing display data constituting the Box screen 20 and, for example, holds a display data ID and display data type information in association with each other.

A display data ID is information capable of identifying a separator line and icons which are pieces of display data to be displayed on the Box screen 20. Display data type information is information indicating whether display data to be displayed on the Box screen 20 is a separator line or an icon. For example, display data type information set to 0 indicates that display data represented by a corresponding display data ID is an icon. In addition, display data type information set to 1 indicates that display data represented by a corresponding display data ID is a separator line.

When the control unit 12 detects that the user has operated the operating unit 11 to press the down key in a standby screen inactive state, the control unit 12 reads out the display data management table from the storage unit 15. The control unit 12 then instructs the display unit 13 to display display data in an order of display data IDs in the display data management table. For example, the display unit 13 sequentially arranges and displays the display data starting at the top left of the screen. When display data type information indicates an icon and the corresponding display data is a first piece of display data, the display unit 13 displays an icon 32 at the top left of the screen (refer to display data ID=1 in Fig. 12). When display data type information indicates an icon and an immediately previous piece of display data is the separator line 31, the display unit 13 displays an icon 32 at a left end of a next row (refer to display data IDs=3, 10 in Fig. 12).

When display data type information indicates an icon and a piece of display data immediately prior to the corresponding display data is the icon 32, the display unit 13 displays an icon 32 to the right of the icon 32 that is the piece of immediately previous display data (refer to display data Ides=4 to 6, 8, 11, 12 in Fig. 12). Moreover, when the maximum number of icons that can be displayed in one row have already been displayed, the display unit 13 displays the icon 32 at the left end of a next row (refer to display data ID=7 in Fig. 12). The maximum number of icons that can be displayed in one row is set in advance to, for example, four. When display data type information indicates a separator line, the display unit 13 displays the separator line 31 in a row subsequent to a row in which a piece of immediately previous display data is displayed (refer to display data IDs=2, 9 in Fig. 12).

A Box screen 20c shown in Fig. 12(a) is a result of displaying display data based on the display data management table shown in Fig. 12(b) as described above.

In addition, the terminal device 1 may be configured so as to always display a part of the icons 32 in a lower part of a standby screen. In this case, one of the icons 32 may be brought into focus when the user operates the operating unit 11 to press the down key. Furthermore, the terminal device 1 may be configured so that whether or not a part of the icons 32 is to be displayed in a standby screen inactive state can be selected based on a user setting. In addition, the Box screen 20 may be displayed upon the user operating the operating unit 11 and performing a flick operation in a standby screen inactive state. Furthermore, an icon movement process can also be performed by dragging an icon 32s that is a movement object. In this case, for example, a new group (new folder) is displayed on the screen upon start of the dragging motion of the icon 32s.

For example, the present invention may be configured as program modules for executing the respective functions of the terminal device 1. In other words, functions comparable to those of the terminal device 1 described above can be realized by having a computer system such as a mobile terminal read in an icon management program comprising an operating module corresponding to the operating unit 11, a control module corresponding to the control unit 12, and a display module corresponding to the display unit 13. For example, the icon management program described above is to be stored in and provided as a storage medium such as a flexible disk, a CD-ROM, a DVD, and a ROM or as a semiconductor memory. Alternatively the icon management program described above may be provided via a network as a computer data signal superimposed on a carrier wave.

### Reference Signs List

- 1: terminal device
- 11: operating unit
- 12: control unit
- 13: display unit
- 15: storage unit
- 20, 20a, 20b: Box screen
- 21: submenu screen
- 31a, 31b, 31n: separator line
- 32: icon
- 32s: icon in focus
- 33: submenu key
- 34: select key
- 35: up key
- 36: down key
- 37: left key
- 38: right key
- 39: page up key
- 40: page down key
- 41: sort key
- 42: clear key
- 101: CPU
- 102: RAM
- 103: ROM
- 104: input device
- 105: display device
- 106: auxiliary storage device

## Claims

1. A terminal device comprising:
operating means for accepting an operation by a user;
display means for classifying one or a plurality of icons into one or a plurality of groups and displaying the classified icons; and
control means for controlling the display means to display a new group when an icon displayed on the display means is set to a move mode by an operation accepted by the operating means.

2. The terminal device according to claim 1, wherein
when the move mode of the icon is exited without the icon being added to a new group displayed on the display means, the control means deletes the new group from a display screen of the display means.

3. The terminal device according to claim 1 or 2, further comprising
storage means for storing the icon and the group, wherein
when an icon displayed on the display means is set to the move mode by an operation accepted by the operating means, the control means controls the display means so as to display the new group without creating the new group in the storage means, and when the icon is added to the new group and then the move mode of the icon is exited, the control means creates the new group in the storage means.

4. An icon management method comprising:
an operating step of accepting an operation by a user;
a displaying step of classifying one or a plurality of icons into one or a plurality of groups and displaying the classified icons on display means; and
a new group displaying step of displaying a new group on the display means when an icon displayed in the displaying step is set to a move mode by an operation performed in the operating step.
